# EUROPEAN PATENT APPLICATION

(11) **EP 3 196 625 A1**
(43) Date of publication of application: **26.07.2017**
(21) Application number: 16152382.4
(22) Date of filing: 22.01.2016
(51) Int. Cl.: G01M 13/02, B65G 43/02

(54) **WEAR MONITORING SYSTEM BY COMPARING WEAR BETWEEN TWO TYPES OF SECTIONS**

(71) Applicant: Renold PLC, Manchester M22 5XB (GB)
(72) Inventor: RAMSBOTTOM, Neil, Bolton, BL2 5PQ (GB); MONAGHAN, Frank, Cheshire, SK8 2AU (GB)
(74) Representative: Pfenning, Meinig & Partner mbB

(57) **Abstract**

The application concerns a wear measurement system and corresponding method for determining an amount of wear in a chain assembly (100; 401, 402), for a chain assembly comprising a plurality of sections and a plurality of connectors connecting neighbouring sections, where at least one of the sections is of a first type and at least one of the sections is of a second type. The wear measurement system comprises a sensor arrangement comprising at least a first sensor (S1) positioned to detect inherent features of the assembly. The wear measurement system further comprises a processing unit configured to determine a plurality of section measurements from sensor data received from the sensor arrangement, and further configured to compare a first subset of section measurements relating to sections of the first type to a second subset of section measurements relating at least to sections of the second type to determine the amount of wear in the chain assembly.

## Description

This application is directed at a wear monitoring system which monitors wear of a device, such as a chain, by comparing two types of sections of said device.

A market shift away from cranked link style chains has seen a real requirement for an alternative method for monitoring the wear, including lengthening, of chains used in industrial applications. Previous methods have relied on monitoring wear in the time domain, by looking at features, such as markers, on the chain passing sensors, usually two sensors, which are placed a fixed distance apart and recording the period of time that it takes for the particular feature or marker to pass from one sensor to the other sensor. That way, the length of the part of the chain between the markers can be measured and assessed.

This type of monitoring and wear assessment requires prior knowledge, such as the time that it previously took for the marker to pass from one sensor to another, in order to determine a change corresponding to an amount of wear in the chain. Also, at least two sensors which are permanently installed on or near the chain drive system are needed.

Certain types of chain assemblies consist of different types of sections of which some, possibly due to their location, material and/or operational mode may be subject to more strain or loading and/or wear faster than other types of sections. In such chains, an amount of wear in the chain assembly can be assessed by comparing the sections of different types.

It is therefore an objective of the present invention to provide an improved system for assessing the wear in a chain based on inherent features of the chain preferably without much prior knowledge about the particular chain.

Such a system and respective method are provided by the independent claims of this application. Preferred embodiments of the system and method are further provided in the dependent claims.

A wear measurement system for determining an amount of wear in a chain assembly is provided, wherein the chain assembly comprises a plurality of sections and a plurality of connectors connecting neighbouring sections. At least one of the sections is of a first type and at least one of the sections is of a second type, where different types of section can, for example, be installed in different places, have different roles with respect to the chain assembly and/or be made of different material.

The different types of sections may wear differently as the chain assembly is used, possibly due to a different placement or different material of the section types. The connectors can be any part or mechanism that is designed and/or configured to hold two sections together, either temporarily or permanently. Depending on the material used for the different types of sections and connectors, the chain may be such that the connectors provides a pivoting point at which neighbouring sections may move pivotally with respect to each other.

The sections of the first and second type are preferably arranged alternately, such that a section of the first type is connected, via a connector, to a section of the second type and vice versa. Alternatively, there might also be more than two different types of sections and/or sections that can be arranged in a non-alternating manner. Each section has a first and a second end and preferably each section is connected to another section via a connector at either end of the section.

The chain assembly can preferably be an endless and/or circular chain, where a plurality of sections and connectors are connected to form a circular chain. Circular chains can be installed to move in one defined direction at a constant or varying speed and/or be designed to move back and forth, i.e. in two distinct directions. Alternatively, the chain assembly can have two distinct ends and/or be designed to move back and forth, i.e. in two distinct directions.

The wear measurement system for determining the amount of wear in the chain assembly further comprises a sensor arrangement comprising at least a first sensor positioned to detect distinct regular features of the assembly, such as, for example, the connectors of the assembly. The first sensor may, for example, be positioned above, below or laterally next to the chain.

Furthermore, the wear measurement system comprises a processing unit configured to determine a plurality of section measurements from sensor data received from the sensor arrangement. The section measurements may relate to the length or size of the individual section and/or to the time it takes for a section to pass the respective sensor (or vice versa) or any other measurement computed from the data received from the sensor arrangement.

The processing unit may be part of a computer system for controlling a chain assembly and may be implemented in hardware or software on said computer system. The processing unit may contain one or more computer processors, computer memory and/or may be configured for automatically executing stored instructions, which may be stored within said memory.

The processing unit is further configured to compare a first subset of section measurements relating to sections of the first type to a second subset of section measurements relating at least to sections of the second type to determine the amount of wear in the chain assembly. The first and second subset of section measurements may be determined by the processing unit based on the section measurements and/or the sensor data received from the sensor arrangement.

It is possible that the second subset of section measurements relates only to sections of the second type, or that the second subset of section measurements relates to subsections of the second as well as another type, for example to subsections of the second as well as the first type. In the latter case, the second subset of section measurements may, thus, in the case where each section is of either the first or second type, relate to section of all types and/or the entire chain.

In order for the wear measurement system to determine the amount of wear of the chain assembly, the chain assembly and the sensors may need to move with respect to each other, i.e. relative to each other. Preferably, the sensors may be stationary, for example during a test cycle, while the chain assembly is being moved either automatically by a power unit or manually, possibly with a predetermined speed. It is alternatively also possible that the chain assembly is stationary while the sensors are being moved along the chain assembly. In this case, the sensors may be part of a hand-held mobile and/or motorised sensor arrangement, or may be temporarily and movably mounted next to the chain. Moving the sensors may be preferable to assess a chain assembly which is not currently in operation.

The comparison of the different subsets of section measurement may be performed by the processing unit, for example, by comparing the statistical distributions, the mean, median, skew, kurtosis, standard deviation or the like of the first and the second subset.

In particular, the sections of the first type might be inner link sections and/or the sections of the second type might be outer link sections, which are preferably arranged alternately within the chain assembly. Furthermore, it is possible that the connectors connecting each pair of neighbouring sections within the chain assembly are made up of an arrangement of rollers, pins and/or bushes collectively or in part. In such chain arrangements, the outer links might be subject to a greater elongation as the chain wears and might, therefore, show earlier and more pronounced signs of wear such as lengthening and/or a reduction of material on connector parts and/or other sections.

The different types of links in chain drive assemblies tend to wear differently. In particular, it is possible that outer link sections wear faster than inner link sections or that inner link sections do not wear in relation to their length but it can be said that in some configurations a wear mechanism is experienced even when a friction reducing device is fitted such as a roller. Thus, if the different types of sections have certain identical properties, such as length, size, weight, colour etc., when new, differences between the different sections become apparent after a particular chain has been in use for a while. Thus, it is possible to get a measurement of the wear of the chain by comparing the wear of the different types of sections. Furthermore it is also possible to get a measurement of wear by comparing the wear of sections of one specific type, for example the inner link type, to the other type or to the chain as a whole.

By using the first sensor to sense inherent features of the chain, for example the connectors connecting each pair of neighbouring sections, it is, for example, possible to get a measurement for the time that it takes for a section of the chain located between two rollers to pass by the sensor by recording the detection times of the rollers and, possibly, saving these detection times to the memory of the processing unit. These time measurements can then, possibly, be correlated with the length of the individual sections of links.

Additionally to the first sensor, it is possible for the system to comprise a second sensor positioned to detect distinct regular features of the assembly, such as sections, for example of the first type. Alternatively it is also possible for the second sensor to detect different distinct regular features of the assembly, such as sections, of the second type. If two sensors are utilized, one for sensing the connectors and another for sensing a certain type of section, it is more easily possible to distinguish between the sections of different types, which makes it possible to assess the individual wear of at least one type of section or link.

It is furthermore possible to position both of the two sensors along the same cross section of the chain or chain assembly or at a, possibly fixed, lengthwise distance, which may be smaller than the length of a section of the chain assembly or smaller than a multiple of lengths of sections of the chain assembly.

Thus, no or only very limited additional knowledge of the individual section lengths is required before installing the sensors and it is possible to attach the system only temporarily and/or removably to any given chain assembly in order to measure the wear of the respective chain assembly and then remove the wear measurement system afterwards.

Alternatively to the wear measurement system comprising an additional sensor it is also possible for the wear measurement system to comprise precisely one sensor. Such a system can be particularly small and easy to install, deinstall and/or maintain.

The section measurements derived from the sensor data received by the processing unit can, for example, each comprise at least one of an On-On-Time, an Off-Off-Time, an On-Duration and/or an Off-Duration for at least one sensor of the sensor arrangement.

Hereby, the terms "On" and "Off" refer to whether the particular sensor detects the respective part of the chain assembly or not. Thus the first sensor can be considered "On" whenever an inherent feature of the chain assembly, for example a connector, is within the reach of the first sensor. Thus, the "On-On-Time" refers to the time period between two consecutive occurrences of the respective sensor switching from Off to On, while the "Off-Off-Time" refers to the time period between two consecutive occurrences of the respective sensor switching from On to Off. Likewise, the On-Duration refers to a continuous time period of the sensor being On, thus detecting the respective part of the chain assembly, while the Off-Duration refers to a continuous time period of the sensor being Off, thus not detecting the respective part of the chain assembly.

The collected section measurements can be analyzed, for example, using a Fourier transform. This may be particularly useful when only one sensor is used.

Each of these respective section measurements may be suitable for assessing the wear of the chain. Depending on the type of sensor and/or on the signal processing performed by the processing unit, a certain type of section measurement may be preferable.

It may, for example, be preferable for the sensor data to be collected during a chain test cycle, preferably of predetermined time length and/or predetermined speed and/or predetermined load. Collecting sensor data while the chain is being moved at a predetermined and/or constant speed causes the collected data to be more consistent and makes it easier to generate and/or identify areas of greater wear and or a wear distribution of the chain.

It may also be possible for sensor data to be collected for a predetermined time length during normal operation of the measured system, where operating conditions such as speed and/or load are not known and/or are varying. In this example, the processing unit may sort the sensor data into one or more collections in which all data points correlate to similar operating conditions. The resulting datasets will be more consistent which makes it easier to generate and/or identify areas of greater wear and or a wear distribution of the chain.

It may also be possible for the wear measurement system to be a mobile wear measurement system to only temporarily collect data from the chain. This is, in particular, facilitated by the fact that the chain wear measurement system presently described does not rely on specific markers being attached to some sections of the chain. Such a mobile wear measurement system, which only temporarily collects data from a particular chain drive assembly, can potentially be smaller and more cost efficient. Furthermore, it is possible to use one mobile wear measurement system in order to assess multiple chains by only temporarily collecting data from each chain for a test cycle.

The at least one sensor of the sensor arrangement may, in particular, detect a proximity of a part of the chain assembly, for example by ferrous detection, light detection, a physical actuation switch, magnetic detection, elasticity, resistance, heat emission, vibration, vertical or lateral movement, conductance, inductance, reluctance, RFID and/or by detecting eddy currents.

It is also possible that one or more of the detection methods may be additionally employed to further refine or highlight a point of interest. For example a wear detection accompanied by an increase in heat generation or vibration may indicate a more rapidly deteriorating section than a simple wear value alone.

The particular detection method and/or sensor to be used in a particular chain measurement system can, for example, depend on the material of the chain or on the surroundings of the chain drive assembly.

Detection can further be analogue or digital, where analogue detection can monitor an actual distance of the detected part of the chain assembly to the respective sensor, while digital detection only records whether there currently is a detectable part of the chain assembly within the range of the respective sensor or not.

It is furthermore possible to install at least one marker on a section and/or on a connector of the chain. In this case, the processing unit can further be configured to determine an amount of wear of a particular section of the chain assembly by determining a particular section measurement of the particular section in relation to a location of the marker and by then comparing the particular section measurement with other section measurements and/or a predefined threshold. The threshold might, for example, be received from a user through a user interface or it might be calculated based on some known properties of the chain.

A marker may also be used to emphasise the importance of a particular section either because of its function in the drive system or because there is reason to believe that a particular section is wearing more rapidly. This information may have been gained through previous wear readings enabling the user to add refinement to the ongoing monitoring process.

As an example, the user may decide to locally apply a particular lubricant to a small section of chain and wish to know if this causes improvement or not.

The marker will identify such a study section.

Comparing the particular section measurement with other section measurements allows for a relative wear assessment and the identification of individual sections which show an amount of wear which is of particular significance in relation to the other sections of the chain. Alternatively, comparing the wear measurement of the particular section with a predefined threshold allows for an absolute assessment of the wear of a given section.

It is also possible to compare the determined amount of wear to several predefined thresholds so as to define several distinct degrees of wear and/or to display an indication of the determined degree of wear to the user. For example, if the determined amount of wear is lower than a first threshold, the degree of wear could be "good", or "green", if the amount of wear is higher than the first but lower than a second threshold, the degree of wear could be "OK" or "orange" and if the amount of wear is higher than the second threshold, the degree of wear could be "worn" or "red".

The chain wear measurement system as described above can further be used as a part of a chain monitoring system, wherein the chain monitoring system further comprises a chain assembly comprising a plurality of sections and a plurality of connectors connecting neighbouring sections, wherein at least one of the sections is of a first type and at least one of the sections is of a second type, as well as a power unit for driving the chain assembly.

In case of the chain monitoring system which is permanently associated and/or attached to a particular chain assembly, the wear measurement system is preferably permanently attached to collect data from a particular chain assembly and can thus, for example, be used for continuously monitoring the chain assembly or be used for intermittent monitoring during normal chain running operation and/or test cycles which may be performed at predefined times, spontaneously, based on user input and/or dependent on predefined conditions of the chain monitoring system and/or the chain assembly. Alternatively, the chain wear measurement system can be temporarily attached to collect data from the chain assembly and thus, for example, be used for intermittent monitoring during normal chain running operation and/or test cycles.

The processing unit of the chain monitoring system may further be configured to display an indication of the amount of wear and/or to do at least one of raising an alarm or activating a lubrication system if the amount of wear exceeds a given threshold.

The indication of the amount of wear can, for example, be displayed on a computer display which is part of a user interface to present an output based on data collected from the processing unit which can be linked to the computer either directly or through communication channels to facilitate information sharing. Alternatively, the amount of wear can be indicated by a voltage output, current output, analogue or digitally encoded signal or by visual means of light, e.g. an LED or fibre optic system, attached to the processing unit and/or the chain monitoring system or by a sound system.

The data may also be a part of an integrated network of drive system data for a factory or multiple factories, outdoor facilities such as mining, leisure parks etc controlled by one or more central systems and accessible through public or private internet lines.

Furthermore, the alarm to be raised by the processing unit of the chain monitoring system if the amount of wear exceeds a certain, given or predefined threshold can, for example, be a visual alarm, an alarm sound or in the form of a text based communication such as email or SMS/text messages to registered users. It is furthermore possible for the processing unit to communicate an alarm to the power unit driving the chain assembly and for the power unit to stop the chain assembly upon receiving such a message from the processing unit. It is furthermore possible for the processing unit to control the position of the chain in position critical applications by means of the indicated outputs, e.g. voltage.

This application is furthermore directed at a method for determining an amount of wear in a chain assembly, where the chain assembly comprises a plurality of sections and a plurality of connectors connecting neighbouring sections. Herein at least one of the sections is of a first type and at least one of the sections is of a second type.

The method for determining the amount of wear in the chain assembly comprises receiving sensor data from a first sensor positioned to detect the inherent features, such as, for example, connectors, of the chain assembly.

The method for determining the amount of wear in the chain assembly further comprises determining a plurality of section measurements from the sensor data.

The method for determining the amount of wear in the chain assembly furthermore comprises determining a first subset of section measurements relating to the first type of sections and determining a second subset of section measurements relating at least to the second type of sections.

Furthermore, the method for determining the amount of wear in the chain assembly comprises comparing the first subset and the second subset to determine the amount of wear in the chain.

The comparison of the first and the second subset can, for example, be performed by comparing the means and/or medians of each subset. It is furthermore possible to eliminate outliers first, for example by removing measurements which differ more than a given threshold from the mean or median of the respective subset.

As described above in relation to the wear measurement system, determining the section measurements can be related to the On-Off switching of the sensor and/or measure times between certain On-Off switching events. It is possible to assign an individual section measurement to each section, to only consider some section measurements, or to consider multiple section measurements for at least some sections.

The method for determining the amount of wear in the chain assembly can furthermore comprise sending an indication of the amount of wear to a user interface and/or raising an alarm if the amount of wear exceeds a given threshold and/or setting an output to a quantity relative to the wear.

The alarm indicating an excessive amount of wear in the chain assembly may, in particular, be raised based on the wear determined for individual sections or, alternatively, based on the overall wear of the chain, which corresponds to an overall lengthening of the chain.

Different problems may be associated with wear of individual sections or links of the chain or with an overall wear, which is distributed among the different sections or links rather evenly.

The method for determining an amount of wear in the chain assembly can furthermore comprise additional steps to implement any of the variants of the system for chain wear measurement as described within this application.

Exemplary, preferred embodiments of the wear measurement system and method of the present application are described below with reference to the following figures. The figures show:
- Figure 1a: a schematic view of a chain and sensor arrangement,
- Figure 1b: a schematic view of an alternative chain with the sensor arrangement of Figure 1a,
- Figure 1c: a visualization of sensor data received from the sensor arrangement of Figures 1a or 1b,
- Figure 2a: a schematic view of the chain of Figure 1a and another sensor arrangement,
- Figure 2b: a schematic view of the chain of Figure 1b and the sensor arrangement of Figure 2a,
- Figure 2c: a visualization of sensor data received from the sensor arrangement of Figures 2a or 2b,
- Figure 3a: a waveform curve representing sensor data of a digital sensor,
- Figure 3b: a waveform curve representing sensor data of an analogue sensor
- Figure 4: a schematic view of a lesser and greater worn chain and their respective sensor data,
- Figure 5a: a schematic representation of section measurements determined from sensor data of a single sensor,
- Figure 5b: another schematic representation of section measurements determined from sensor data of a single sensor,
- Figure 6: a curve showing a distribution of section measurements for a lesser worn chain, and
- Figure 7: a curve showing a distribution of section measurements for a greater worn chain.

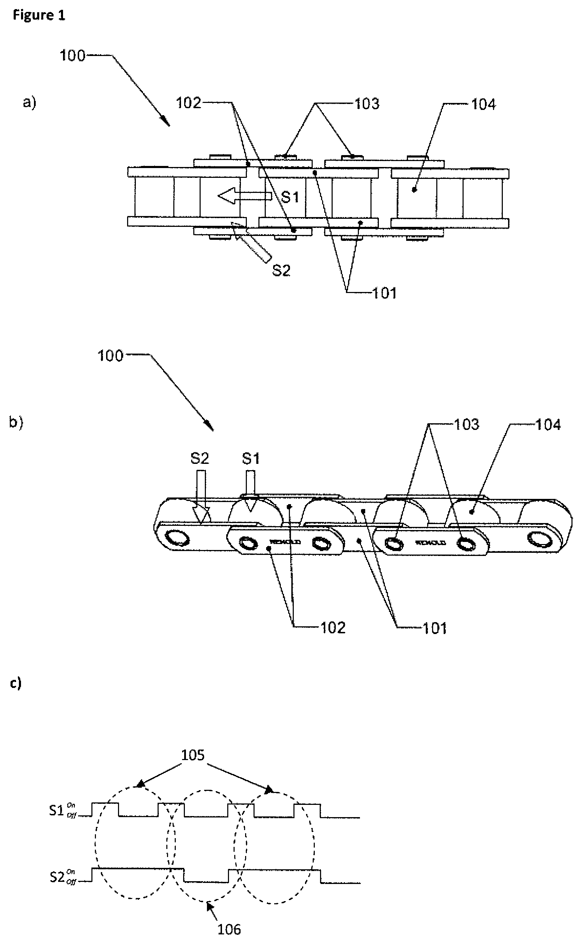

Figures 1a shows an embodiments of a chain assembly 100 consisting of several inner link sections 101 as well as several outer link sections 102. The inner link sections and outer link sections are arranged alternately and each pair of neighbouring links is connected via a pin 103, and in certain chain designs, an engagement element or connecting element or collective arrangement of the two which may be used as a transport element referred to here, for minimalistic purposes, as a roller 104 may or may not be present either collectively or in part.

Figure 1b shows a different viewing angle of the chain assembly 100 consisting of the same parts.

The chain assembly 100 of Figures 1a and 1b furthermore each show a sensor arrangement comprising sensors S1 and 52. Sensor S1 is positioned above the roller of the chain in the middle of the inner link section with respect to the inner link width and is pointed downwards to detect, in one instance, the rollers 104 of the respective chain assembly 100. Furthermore, sensor S2 is also positioned above the chain and also pointing downwards, but sensor S2 is located near an edge of the chain such that sensor S2 can detect the inner link sections.

In Figure 1a, the two sensors S1 and S2 are positioned along the same cross section of the chain, such that S2 can identify the inner link section, while in Figure 1b, the two sensors are positioned slightly spaced apart, but are less than the length of a link section apart.

Figure 1c shows the digital sensor data recorded by the sensors S1 and S2, where each respective sensor is "On" whenever the sensor detects a part of the chain assembly (which is within the range of the respective sensor) and "Off" otherwise. The data recorded by both sensors S1 and S2 is received by the processing unit, which is configured for determining section measurements from the received sensor data. As shown in Figure 1c, through a combination of the data recorded by the two sensors S1 and S2, it is possible to determine section measurements for inner link section 105 as well as outer link sections 106. The different types of sections are apparent from the sensor data of sensor S2, which is ON whenever sensor 52 detects an inner link section.

Thus, the primary sensor S1 monitors any regularly recurring inherent features of the chain reminiscent of rollers 104, extended pins or plates to provide a time based waveform as the chain travels past the sensor S1, where the chain is powered by a power unit. The On-Off waveform of sensor S1 will vary as the chain wears. The second sensor S2 can be used to ascertain inner link sections from other sections by monitoring different inherent features on the chain reminiscent of the inner-plates or outer-plates or any other feature inherent or not to the chain design. Such features could be added specifically for the purpose of section identification. The On-Off waveform recorded for sensor S2 will vary, for example less significantly, as the chain wears. Taking the example of the roller being detected, then all connectors, such as rollers, are on the inner link sections. Therefore, when the outer link wearing components, for example, pins and the inner link wearing components, for example bushes, that the pins interface with, are subject to tribological loading against one another, the gap between two adjacent rollers situated on adjacent inner links and bridged by one outer link increases. This has the effect of making the bridging outer link appear to get longer and therefore to have greater wear. The sensor data from the second sensor S2 can be used to isolate the sensor data recorded for the lesser wearing inner link sections of the chain from the sensor data recorded for the greater wearing outer link sections of the chain in the data collected from the first sensor S1.

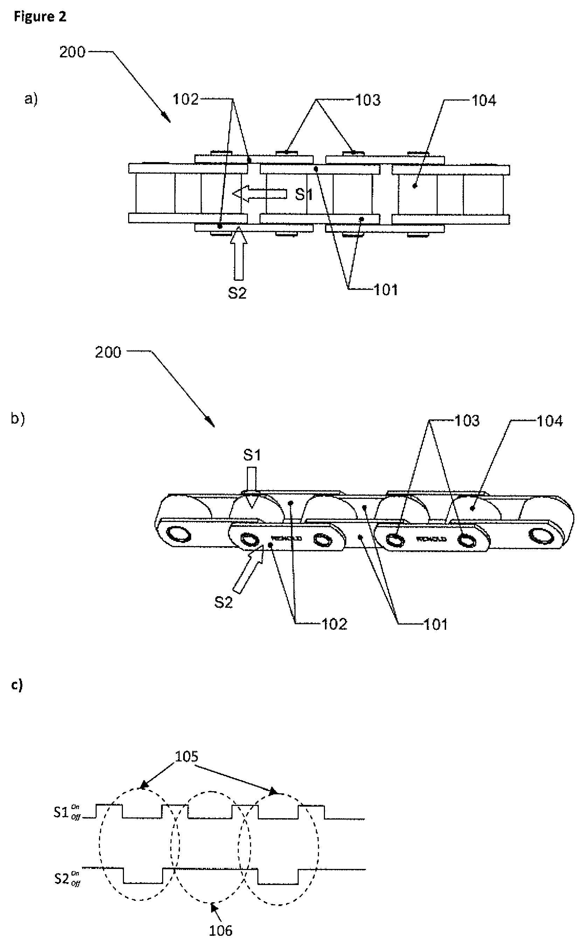

Figures 2a and 2b show a chain assembly 200, which corresponds to the chain assembly 100 of Figures 1a and 1b, respectively, but with different sensor arrangements. While sensor S1 is positioned in the same manner as described above with respect to Figures 1a and 1b, sensor S2 is positioned next to the chain assembly and pointing at the chain in order to detect the outer link sections 102 of the chain assembly.

The positioning of the sensor arrangement shown in Figures 2a, 2b causes the sensor data of the sensor 52, as shown in Figure 1c, to differ from the sensor data of sensor S2 in Figure 1c. Still, the processing unit is configured to combine the sensor data received from the sensor arrangement in order to determine section measurements for the inner link sections 105 as well as the outer link sections 106.

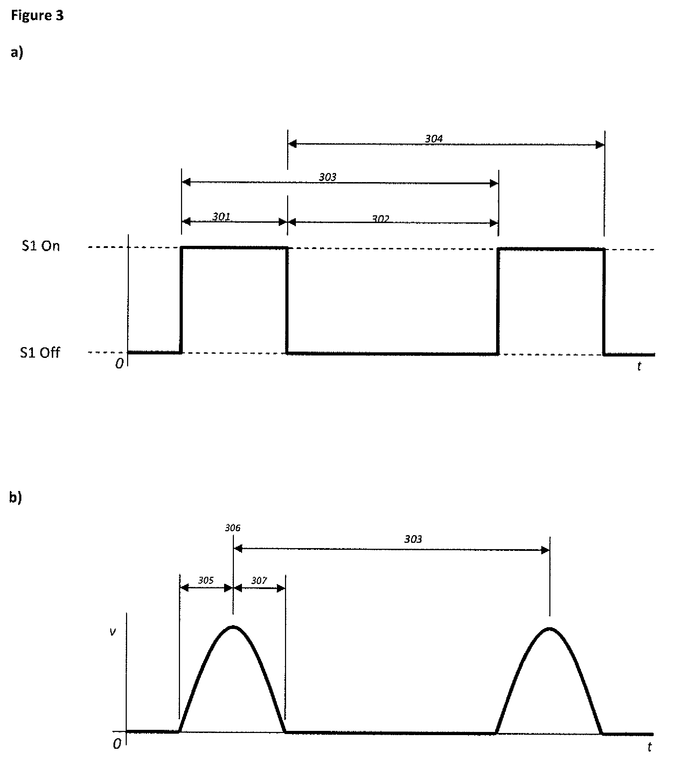

Figure 3 illustrates the differences between data recorded by a digital sensor S1 (depicted in Figure 3a) and the data recorded by an analogue sensor S1 (depicted in Figure 3b), both of which are measured over time t.

The sensor S1 of Figure 3a is either On or Off, without any intermediate measurements. Various measurements can be derived from such digital sensor data, such as an On-Duration 301, and Off-Duration 302, an On-On-Time 303 as well as an Off-Off-Time 304. Each of these measurements can serve to determine section measurements for a respective section of the chain.

In contrast, Figure 3b shows analogue sensor data of a sensor S1, possibly a proximity sensor which measures the distance to an object. Depending on the detected proximity, the sensor S1 of Figure 3b outputs a voltage v, which is then sent to the processing unit. The detection of a roller according to Figure 3b can, thus, be divided into two stages, a rising edge stage 305 and a falling edge stage 307. The rising edge stage 305 marks the time from the beginning of detection until the maximum voltage value 306, which occurs when the roller is closest to the sensor S1, i.e. at the centre of the roller. The falling edge stage 307 marks the time period from the maximum voltage value 306 until the end of detection. With an analogue sensor S1, the On-On-Duration for the sensor S1 can be determined by taking the time from one maximum voltage value 306 until the next maximum voltage value 306', thus measuring, in case of roller detection, the time it takes for the chain to pass by the sensor S1 from the centre of one roller to the centre of the next roller.

Once the section measurements for the inner link sections and the section measurements for the outer link sections have been determined by the processing unit from the received sensor data, an amount of wear, such as a wear ratio, between the two sets of section measurements is determined by comparing the two sets of section measurements, the chain as a whole and/or other known or predetermined quantities and/or properties.

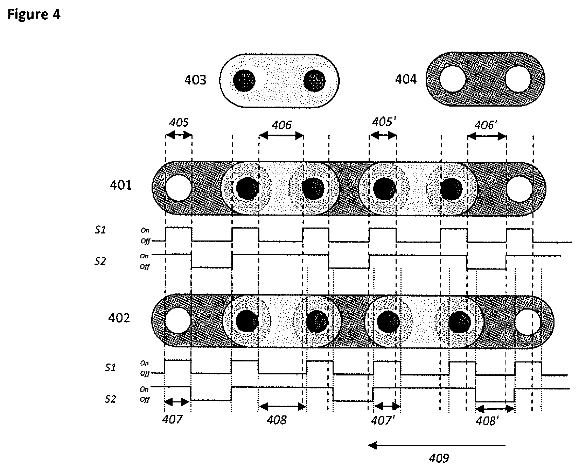

Figure 4 shows how the sensor data of the chain assembly and sensor arrangement as shown in Figure 1a differ between a new or lesser worn chain 401 and a greater worn chain 402.

In particular, Figure 4 shows two chains 401 and 402, each made up of alternately arranged inner link sections 404 and outer link sections 403. Each chain is monitored by a sensor arrangement comprising two sensors S1 and S2 (not shown), which are arranged in the same manner as in Figure 2a with sensor S1 detecting the rollers and sensor S2 detecting the outer link sections 403.

Each of the chains 401 and 402 travels past the sensors S1 and S2 in direction 409. The sensor readings (On or Off) for each part of each chain are further shown below each respective chain in Figure 4.

The On-Durations of sensor S1 are identical throughout the sensor readings for both chains. However, the Off-Durations for sensor S1 differ between the two chains. For the newer chain 401, the Off-Durations of sensor S1 are nearly identical for both the Off-durations corresponding inner link sections 404 and the Off-Duration corresponding to outer link sections 403.

In the more worn chain 402, the outer link sections 403 have experienced more wear, such as lengthening. Thus, the sensor data for sensor S1 with respect to the more worn chain 402 shows longer Off-Durations for the outer link sections 403 than for the inner link sections 404. Furthermore, the appearance of lengthening is due to a reduction of material at contact faces between that of the outer link sections and the inner link sections and therefore the correspondingly longer Off-Durations for sensor S1 are visible by comparing the dashed lines, corresponding to On/Off-switching times of sensor S1 for the lesser worn chain 401, with the solid lines, corresponding to the On/Off-switching times of sensor S1 for the more worn chain 402.

The processing unit can then determine section measurements for the individual section readings by taking the On-On-Times for sensor S1, as shown, for example, in Figures 1, 2 and 4. The sensor data from sensor S2 further serves to distinguish between section measurements corresponding to either inner link sections 404 or outer link sections 403.

The second sensor S2 can thus serve to identify either the edge of inner link sections, or the edge of the outer link sections, or the outside face of the outer link sections. It is of little importance which locality is employed for the second sensor S2, providing there are clearly identifiable differences between the inner link sections and the outer link sections. Utilizing sensor S2 therefore simplifies the sorting of the data from sensor S1 into a collection of On-On-Times while identifying the inner link sections from the outer link sections. No further information from sensor S2 is usually required.

There is a particular benefit to utilising sensor S2 for new chains, but once there is wear the difference between the section measurements of inner link sections and outer link sections presents itself naturally. The sensor 52 would be useful for data verification purposes during the early stages of chain wear monitoring on new or lesser worn chains.

Thus, it is also possible to determine the amount of wear in the chain by utilizing only a single sensor S1, as will be described in more detail below.

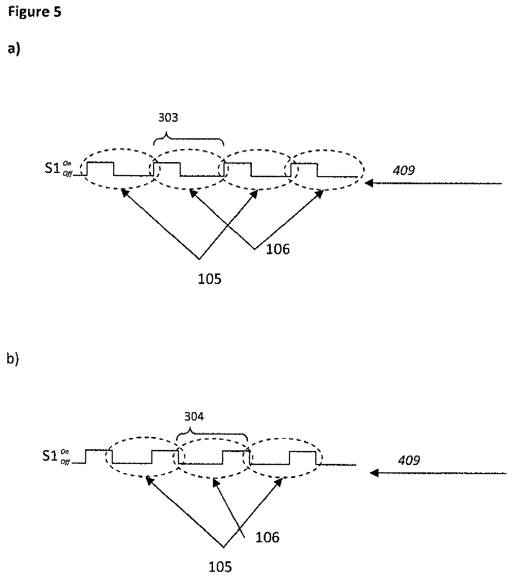

Figures 5a and 5b illustrate how section measurements corresponding to On-On-Times 303 or section measurements corresponding to Off-Off-Times 304 may be derived from the sensor data of sensor S1 alone. Both Figures 5a and 5b show the sensor data for sensor S1 for a chain such as the chain 401 or chain 402 of Figure 4, which is moving in direction 409. The section measurements (either On-On-Times 303 or Off-Off-Times 304) alternate between inner link sections 404 and outer link sections 403. As the Off-Durations only differ slightly for the different section types in a lesser worn chain, it might not be, at first, apparent whether a section measurement corresponds to an inner link section or an outer link section.

Under the assumption that the chain wears similarly in each part of the chain, the processing unit could be configured to place the section measurements, as determined by the processing unit from the sensor data received from the sensor arrangement, alternately into two different sets, one set for each section type. The processing unit could then be configured for determining the statistical distribution and some statistical properties of each of the two sets, such as mean, median, standard deviation, skew and/or kurtosis. The determined values for at least some of these properties could then be compared between the two sets in order to assess the wear, of the chain without any prior knowledge of the section lengths. For example a wear ratio could be calculated by dividing a value determined by the processing unit for one set for a certain property by a correspondingly determined value of the other set or can be on the first set and extracted data for both sets combined.

Furthermore, outliers of the one or two distributions can be assessed. Outliers could be removed from the sets, so that they do not negatively influence the distribution, or outliers and/or their corresponding sections could receive special attention in order to address possible issues associated with said outliers. Outliers might correspond to sections which are particularly worn, or they might be due to faulty sensor data and/or slight deviations between the section length cause by slight imprecisions during the manufacturing process.

However, the ability to sort the section measurements into two sets corresponding to the two different types of sections strongly depends on the sections being arranged alternately and further on the preciseness of the sensors. If the sections may not be arranged alternately and/or the sensor might, occasionally provide faulty readings, it becomes necessary to determine an amount of wear from the section measurements alone without prior know-ledge about which section measurements corresponds to which type of section.

In order to determine the amount of wear from a single dataset of section measurements, where the section measurements are either On-On-Times of sensor S1 or Off-Off-Times of sensor S1, the processing unit can be configured to first determine a dataset, which is a subset of all the section measurements determined from the collected sensor data. This dataset, which is also referred to as "Dataset", may be determined by creating a histogram and using the bin with the highest frequency as the dataset, or by sorting the data into collections in another way.

The dataset then consists of section measurements, where (roughly) 50% of the section measurements correspond to the lesser wearing inner link sections and (roughly) 50% of the section measurements correspond to the higher wearing outer link sections.

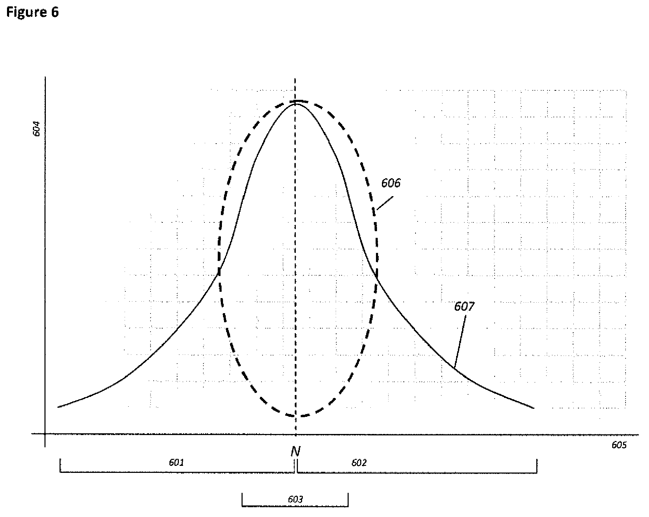

Figure 6 shows a distribution of the number 604 of On-On-Times 605 for sensor data received for sensor S1 for a lesser worn chain. Said distribution for a lesser worn chain could have a curve 607, as shown in Figure 6, with high kurtosis and neutral skew. The median N of the section measurement data shown in Figure 6 could, in theory, be used to divide the set of section measurements into an Lower-Half subset 601, corresponding to the inner link section measurements, and an Upper-Half subset 602, corresponding to the upper link section measurements. However, due to slight imprecision in the measuring process, it is not possible to clearly and unambiguously assign the data points located in a crossover section 603 to either the inner link section measurements or the outer link section measurements, as the data points located within the data region 606 share similar properties and could be associated with either an inner link section or an outer link section. An interval of the crossover section can be determined by various statistical methods.

If the chain is slightly more worn, with the wear being evenly distributed throughout the chain, the distribution would have a slightly lesser kurtosis while maintaining a neutral skew. Should any sections of the chain wear more rapidly, then the skew could be affected. Thus, the processing unit could further be configured for monitoring separately for the skew, possibly in conjunction with the kurtosis, in order to raise an alarm to the user in case of irregular wear.

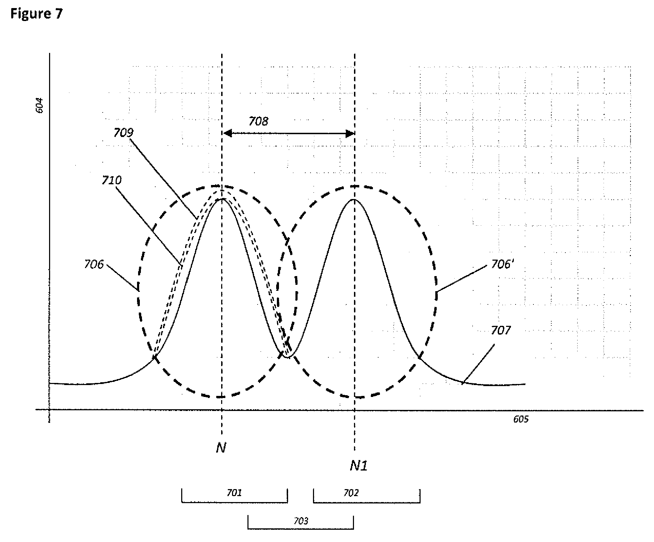

Once the chain starts to experience more wear, the differences between the inner and outer link sections become more apparent, as shown in Figure 7. The curve 707 of the number or frequency 604 of On-On-Times 605 shows two clearly distinguishable Upper-Half 702, also shown in the diagram as data region 706', and Lower-Half 701, also shown in the diagram as data region 706, subsets, each with a respective mean, median or other statistically derived value N or N1 with a difference 708. A crossover subset 703, where the data cannot be unambiguously assigned to lesser wearing inner link sections or greater wearing outer link sections can still be determined. For a distribution as shown in Figure 7, the processing unit could then determine an amount of wear or wear ratio by comparing the values N and N1 or values N with a quantity derived for the whole chain, for example by determining a ratio of the values N and N1, each corresponding to the mean or median of the sections measurements of the inner link sections and the outer link sections, respectively.

It is acknowledged that on certain chain designs, where there is a rotating feature between the plates, in one example a roller, it can be expected that the time that the sensor is activated, denoted as the *On-Time (or* rising edge), would become susceptible to small amounts of wear at the interface between the inside face of the roller and the outside face of the bush, referred to here as inner-roller wear, also as the outside face of the roller come into contact with the sprocket, this interface can wear also referred to as outer-roller wear, collectively known just as roller wear. What we could expect to see would be an increased variation in the activating and deactivating of the sensor S1. In theory, this would have a direct impact on the *On-Time.* In practice these effects would be obscured by a compound effect of inherent discrepancies in the chain drive especially when combined with process variations and machine vibrations. In addition to that, a consideration must be made for any hysteresis and other imperfections in the preferred sensor that is used. The compound effect of these irregularities would be considered inconsequential and especially when compared to the wear at the interface between the outside face of the pin and the inside face of the bush, referred to pitch wear. It is this latter wear mechanism that is of greater interest, and is more obvious to detect primarily due to the work loading on the chain under normal operating conditions. The effects of roller wear on the distribution of the On-On-Times of sensor S1 are further shown in Figure 7, where the dashed line 710 shows the effect on the curve representing said distribution with a small amount of roller wear, while the dashed line 709 shows the curve of the distribution with a larger amount of roller wear.

Alternatively, it is also possible to analyse the data collected by one, two or more sensors, as described above, in different ways, for example by performing a Fourier analysis on said collected data.

## Claims

1. A wear measurement system for determining an amount of wear in a chain assembly (100; 401, 402), the chain assembly comprising a plurality of sections and a plurality of connectors connecting neighbouring sections, wherein at least one of the sections is of a first type and at least one of the sections is of a second type, the wear measurement system comprising:
- a sensor arrangement comprising at least a first sensor (S1) positioned to detect inherent features of the assembly;
- a processing unit configured
o to determine a plurality of section measurements from sensor data received from the sensor arrangement, and
o to compare a first subset of section measurements relating to sections of the first type to a second subset of section measurements relating at least to sections of the second type to determine the amount of wear in the chain assembly.

2. The system of claim 1, wherein the sections of the first type are inner link sections (101; 404) and/or the sections of the second type are outer link sections (102; 403), wherein the inner link sections (101; 404) and outer link sections (102; 403) are preferably arranged alternatingly within the chain assembly (100; 401, 402), and/or the connectors are rollers (104), pins (103) and/or bushes connecting each pair of neighbouring sections.

3. The system of claim 1 or 2, further comprising a second sensor (S2) positioned to detect the sections of at least one type.

4. The system of claim 3 wherein the second sensor (52) is positioned along the same cross section of the chain (100; 401, 402) as the first sensor (S1) or at a length-wise distance smaller than the length of a section of the chain assembly (100; 401, 402) from the first sensor (S1).

5. The system of claim 1 or 2, wherein the sensor arrangement comprises precisely one sensor.

6. The system of any of the preceding claims, wherein the section measurements each comprise at least one of an On-On-Time (303), an Off-Off-Time (304), an On-Duration (301) and/or an Off-Duration (302) for at least one sensor of the sensor arrangement.

7. The system of any of the preceding claims, wherein the sensor data is collected during a chain test cycle and/or wherein the sensor arrangement and the chain assembly are configured to move in relation to each other during sensor data collection.

8. The system of any of the preceding claims, wherein the wear measurement system can be either permanently or temporarily and/or removably attached to the chain assembly (100; 401, 402).

9. The system of any of the preceding claims, wherein at least one sensor of the sensor arrangement detects a proximity of a part of the chain assembly (100; 401, 402) by ferrous detection, light detection, a physical actuation switch, magnetic detection, elasticity, resistance, conductance, inductance, reluctance, RFID and/or by detecting eddy currents.

10. The system of any of the preceding claims further comprising at least one marker to be installed on a section of the chain (100; 401, 402) and wherein the processing unit is further configured to determine an amount of wear of a particular section of the chain assembly (100; 401, 402) by determining a particular section measurement of the particular section in relation to a location of the marker and comparing the particular section measurement with other section measurements and/or a predefined threshold.

11. A chain monitoring system comprising
- the chain wear measurement system according to any of the preceding claims,
- a chain assembly (100; 401, 402) comprising a plurality of sections and a plurality of connectors connecting neighbouring sections, wherein at least one of the sections is of a first type and at least one of the sections is of a second type,
- a power unit for driving the chain assembly.

12. The chain monitoring system according to claim 11, wherein the processing unit is further configured to display an indication of the amount of wear, and/or to do at least one of raising an alarm or activating a lubrication system or generate output to provide an indication to the power unit and/or other systems if the amount of wear exceeds a given threshold.

13. A method for determining an amount of wear in a chain assembly (100; 401, 402), the chain assembly (100; 401, 402) comprising a plurality of sections and a plurality of connectors connecting neighbouring sections, wherein at least one of the sections is of a first type and at least one of the sections is of a second type, comprising:
- receiving sensor data from a first sensor positioned to detect inherent features of the chain assembly,
- determining a plurality of section measurements from the sensor data,
- determining a first subset of section measurements relating to the first type of sections and determining a second subset of section measurements relating at least to the second type of sections,
- comparing the first subset and the second subset to determine the amount of wear in the chain.

14. The method according to claim 13, wherein determining each of the plurality of section measurements comprises determining an On-On-Time (303), an Off-Off-Time (304), an On-Duration (301) and/or an Off-Duration (302) of at least one sensor of the sensor arrangement.

15. The method according to claim 13 or 14, further comprising sending an indication of the amount of wear to a user interface and/or raising an alarm if the amount of wear exceeds a given threshold.
